(19) Europäisches Patentamt
European Patent Office
Office européen des brevets

(11) EP 1 908 347 A1

(12) **EUROPEAN PATENT APPLICATION**
published in accordance with Art. 153(4) EPC

(43) Date of publication:
**09.04.2008 Bulletin 2008/15**

(21) Application number: **06756449.2**

(22) Date of filing: **22.05.2006**

(51) Int Cl.:
***A01N 25/00*** *(2006.01)* ***A01N 25/02*** *(2006.01)*
***A01N 25/04*** *(2006.01)* ***A01N 41/06*** *(2006.01)*
***A01N 43/40*** *(2006.01)* ***A01N 43/50*** *(2006.01)*
***A01N 43/78*** *(2006.01)* ***A01N 43/653*** *(2006.01)*

(86) International application number:
**PCT/JP2006/310143**

(87) International publication number:
**WO 2006/129510 (07.12.2006 Gazette 2006/49)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.06.2005 JP 2005160815**
**21.04.2006 JP 2006118088**

(71) Applicant: **Nissan Chemical Industries, Ltd.**
**Chiyoda-ku,**
**Tokyo 101-0054 (JP)**

(72) Inventors:
- **FURUSAWA, Hiroyuki**
  **Funabashi-shi, Chiba 2748507 (JP)**
- **HASUNUMA, Nakako**
  **Shiraoka-cho, Minami Saitama (JP)**
- **HONDA, Takashi**
  **3-chome, Chiyoda-ku, Tokyo 1010054 (JP)**

(74) Representative: **HOFFMANN EITLE**
**Patent- und Rechtsanwälte**
**Arabellastrasse 4**
**81925 München (DE)**

# (54) LABORSAVING METHOD OF APPLYING PESTICIDE

(57) A new method for applying agricultural chemicals is provided. A method for applying agricultural chemicals including irrigating or spraying a water solution or an aqueous dispersion of active components of agricultural chemicals to nursery areas for seedlings of field crops before settled planting of the seedlings. It is preferable to irrigate or spray the water solution or the aqueous dispersion of active components of agricultural chemicals at an amount of from 20 mL to 2100 mL, especially from 20 mL to 1600 mL, per 100 plants.

EP 1 908 347 A1

**Description**

TECHNICAL FIELD

The present invention relates to a method for labor-saving application of agricultural chemicals for seedlings of field crops.

BACKGROUND ART

To control soil diseases represented by clubroot, root-rot, or damping-off diseases, mixing a powder formulation with soil is commonly used. However, the amount of the applied formulation is as very high as 20 to 40 kg/10 ares, which inflicts a great burden on an applicator. Therefore, development of a more labor-saving control method is wanted (see, Non-Patent Documents 1 and 2, for example).

Powder formulation used for soil mixing treatment has particle sizes of as fine as 300 meshes or more (46 μm or less), therefore, when they are applied, it is likely to drift to fields, houses, or other facilities adjacent to the targeted field even by a breeze. Therefore, environmental contamination due to drifted powder formulation often causes problems including chemical hazard to useful crops cultivated in other fields than targeted ones and adverse effects on safety of, but not limited to, applicators. Therefore, development of new less-drifting agricultural formulations or methods for less-drifting application is in demand.

Non-Patent Document 1: Shimpan Dojo Byogai no Tebiki (New Edition of A Manual of Soil Diseases), edited by the Editorial Board of New Edition of A Manual of Soil Diseases, Japan Plant Protection Association, Oct. 1, 1984. pp. 175-184

Non-Patnet Document 2: Noyaku Sampu Gijutsu (Techniques for Spraying Agricultural Chemicals), edited by the Editorial Board of Techniques for Spraying Agricultural Chemicals, Japan Plant Protection Association, 1998. pp. 125-126, 202-207

DISCLOSURE OF THE INVENTION

[Problem to be Solved by the Invention]

It is an object of the present invention to provide a method for applying agricultural chemicals that is more labor-saving than mixing a powder formulation with soil and is highly safe for the environment and applicators.

[Means for Solving the Problem]

The present inventors have found, after intensive study, that applying a water solution or aqueous dispersion of active components of agricultural chemicals to seedlings of field crops can provide more excellent effects on controlling soil diseases compared with mixing with soil that has been conducted conventionally, reduce workers' labor and environmental contamination, and provide higher safety for applicators.

Especially, the present inventors have found that the less the amount of an applied water solution or aqueous dispersion of active components of agricultural chemicals per unit number of seedlings or per nursery area for seedlings, the higher their advantageous effects on controlling soil diseases at a certain amount of applied active components of agricultural chemicals per unit number of seedlings or per unit area, and completed the present invention.

Therefore, the present invention relates to methods for applying an agricultural chemical described under the following (1) to (17), a method for controlling pests described under the following (18) (the methods (1) to (18) are hereinafter referred to as the methods according to aspects of the present invention), and a water solution or an aqueous dispersion of an active component of an agricultural chemical described under the following (19).

(1)
A method for applying an agricultural chemical including irrigating or spraying a water solution or an aqueous dispersion of an active component of the agricultural chemical to a nursery area for seedlings of a field crop before settled planting of the seedlings.

(2)
A method for applying an agricultural chemical including irrigating or spraying a water solution or an aqueous dispersion of an active component of the agricultural chemical to a nursery container for seedlings of a field crop before settled planting of the seedlings.

(3)

A method for applying an agricultural chemical including irrigating or spraying a water solution or an aqueous dispersion of an active component of the agricultural chemical to a nursery container for seedlings of a field crop during a period between bed soil filling and settled planting of the seedlings.

(4)

The method for applying described under any one of the above (1) to (3) in which the water solution or the aqueous dispersion of the active component of the agricultural chemical is prepared by diluting an agricultural chemical formulation with water.

(5)

The method for applying described under any one of the above (1) to (4) in which the water solution or the aqueous dispersion of the active component of the agricultural chemical is irrigated or sprayed at a volume from 20 mL to 2100 mL per 100 plants.

(6)

The method for applying described under any one of the above (1) to (4) in which the water solution or the aqueous dispersion of the active component of the agricultural chemical is irrigated or sprayed at a volume from 20 mL to 1600 mL per 100 plants.

(7)

The method for applying described under any one of the above (1) to (4) in which the water solution or the aqueous dispersion of the active component of the agricultural chemical is irrigated or sprayed at a volume from 20 mL to 1100 mL per 100 plants.

(8)

The method for applying described under any one of the above (1) to (4) in which the water solution or the aqueous dispersion of the active component of the agricultural chemical is irrigated or sprayed at a volume from 20 mL to 600 mL per 100 plants.

(9)

The method for applying described under any one of the above (1) to (4) in which the water solution or the aqueous dispersion of the active component of the agricultural chemical is irrigated or sprayed at a volume from 20 mL to 2100 mL per a 1800 $cm^2$-nursery-area for the seedlings.

(10)

The method for applying described under any one of the above (1) to (4) in which the water solution or the aqueous dispersion of the active component of the agricultural chemical is irrigated or sprayed at a volume from 20 mL to 1600 mL per a 1800 $cm^2$-nursery-area for the seedlings.

(11)

The method for applying described under any one of the above (1) to (4) in which the water solution or the aqueous dispersion of the active component of the agricultural chemical is irrigated or sprayed at a volume from 20 mL to 1100 mL per a 1800 $cm^2$-nursery-area for the seedlings.

(12)

The method for applying described under any one of the above (1) to (4) in which the water solution or the aqueous dispersion of the active component of the agricultural chemical is irrigated or sprayed at a volume from 20 mL to 600 mL per a 1800 $cm^2$-nursery-area for the seedlings.

(13)

The method for applying described under any one of the above (1) to (12) in which the active component of the agricultural chemical is an insecticide or a fungicide.

(14)

The method for applying described under any one of the above (1) to (12) in which the active component of the agricultural chemical is a fungicide.

(15)

The method for applying described under any one of the above (1) to (12) in which the active component of the agricultural chemical has an effect controlling a soil disease.

(16)

The method for applying described under any one of the above (1) to (12) in which the active component of the agricultural chemical has an effect controlling clubroot disease.

(17)

The method for applying described under the above (16) in which the active component with an effect controlling clubroot disease is 3-(3-bromo-6-fluoro-2-methylindole-1-ylsulfonyl)-N,N-dimethyl-1H-1,2,4-triazole-1-sulfonamide, cyazofamide, fluazinam, flusulfamide, and ethaboxam.

(18)

A method for controlling pests using the method for applying described under any one of the above (1) to (17).

(19)

A water solution or an aqueous dispersion of an active component of an agricultural chemical used in the method for applying described under any one of the above (1) to (17).

[Effects of the Invention]

According to the above-described aspects of the present invention exert more excellent effects controlling soil diseases compared with mixing with soil that has been conducted conventionally, as well as reducing workers' labor and environmental contamination, thereby providing higher safety for applicators.

BEST MODES FOR CARRYING OUT THE INVENTION

A nursery area for seedlings of field crops according to the present invention means a place or container where seedlings of field crops are grown.
A nursery container for seedlings of field crops used in the present invention is a container which is used for nursery of seedlings of field crops, represented by a nursery box, a plastic pot, a cell tray, a cell seedling tray, a plug tray, Paper Pot (registered trademark, Nippon Beet Sugar Manufacturing Co., Ltd.), and Chain Pot (registered trademark, Nippon Beet Sugar Manufacturing Co., Ltd.).
A water solution of active components of agricultural chemicals used in the present invention is a solution of active components of agricultural chemicals dissolved in a solvent containing water as a principal component wherein other component can be dissolved, emulsified, or suspended.
An aqueous dispersion of active components of agricultural chemicals used in the present invention is a dispersion of active components of agricultural chemicals emulsified or suspended in a disperse medium containing water as a principal component wherein other component can be dissolved, emulsified, or suspended. A microemulsion of active components of agricultural chemicals is also included in an aqueous dispersion of active components of agricultural chemicals of the present invention. "A water solution or an aqueous dispersion of active components of agricultural chemicals" are hereinafter simply referred to as "a chemical solution."
Active components of agricultural chemicals that can be used for the present invention include, but not limited to, herbicides, insecticides, acaricides, nematocides, bactericides, antivirals, plant growth regulators, fungicides, synergists, attractants, repellents, and biopesticides. Specific generic names (or chemical names) of preferable active components of agricultural chemicals for example are as follows, but not limited to these.
Fungicides: 3-(3-bromo-6-fluoro-2-methylindole-1-ylsulfonyl)-N,N-dimethyl-1H-1,2,4-triazole-1-sulfonamide (compound described in WO99/21851, hereinafter referred to as Compound A), acibenzolar-S-methyl, acylaminobenzamide, acypetacs, aldimorph, amobam, ampropyfos, anilazine, allyl alcohol, aureofungin, azaconazole, azithiram, azoxystrobin, barium polysulfide, benalaxyl, benodanil, benomyl, benquinox, bentaluron, benthiavalicarb, benthiazole, benzalkonium chloride, benzamacril, benzamorf, benzohydroxamic acid, binapacryl, biphenyl, bitertanol, bithionol, bethoxazine, bordeaux mixture, boscalid, blasticidin-S, bromoconazole, bupirimate, buthiobate, butylamine, calcium polysulfide, captafol, captan, copper oxychloride, carpropamid, carbamorph, carbendazim, carboxin, carvone, Cheshunt mixture, chinomethionat, chlobenthiazone, Chloraniformethane, Chloranil, chlorfenazol, 5-chlor-7-(4-methyl-piperidin-1-yl)-6-(2,4,6-trifluor-phenyl)-[1,2,4]triazolo[1,5-a]pyrimidin, chloroneb, Chloropicrin, chlorothalonil, Chlorquinox, chlozolinate, Climbazole, Clotrimazole, copper acetate, basic copper carbonate, copper hydroxide, copper naphthenate, copper oleate, basic copper oxychloride, copper sulfate, basic copper sulfate, copper zinc chromate, cresol, cufraneb, cuprobam, cyazofamid, cyclafuramid, cycloheximide, cyflufenamid, cymoxanil, cypendazole, cyproconazol, cyprodinil, cyprofuram, dazomet, DBCP, debacarb, Decafentin, dehydroacetic acid, dichlone, dichlorophen, dichlozoline, diclobutrazol, dichlofluanid, diclomedine, dicloran, diethofencarb, diethyl pyrocarbonate, diclocymet, difenoconazole, diflumetorim, dimethirimol, dimethomorph, dimoxystrobin, diniconazole, diniconazole-M, dinobuton, dinocap, dinocap-4, dinocap-6, dinocton, dinosulfon, dinoterbon, diphenylamine, dipyrithione, disulfiram, ditalimfos, dithianon, DNOC, dodemorph, dodine, drazoxolon, edifenphos, epoxiconazole, etaconazole, ethaboxam, ethirimol, etridiazole, Etem, Ethoxyquin, ethylmercury acetate, ethylmercury bromide, ethylmercury chloride, ethylmercury phosphate, famoxadone, fenarimol, febuconazole, fenamidone, fendazosulam, fenfuram, fenhexamid, fenoxanil, fenpiclonil, fenpropidin, fenpropimorph, fentin, ferbam, ferimzone, fluazinam, fludioxonil, fluopicolide, fluoroimide, fluquinconazole, flusilazole, flusulfamide, flutolanil, flutriafol, folpet, fesetyl-aluminium, fuberidazole, furalaxyl, furametpyr, fenaminosulf, fenapanil, fenitropan, fenoxanil, flumetover, flumorph, fluotrimazole, fluoxastrobin, furcarbanil, furconazole, furconazole-cis, furmecyclox, furophanate, guazatine, glyodin, griseofulvin, hexachlorobenzene, hexaconazole, hymexazol, halacrinate, hexachlorobutadiene, hexylthiofos, 8-hydroxyquinoline sulfate, imazalil, imibenconazole, iminoctadine, ipconazole, iprobenfos, iprodione, isoprothiolane, iprovalicarb, isovaledione, kasugamycin, kresoxim-methyl, mancopper, mancozeb, mandipropamid, maneb, mepanipyrim, mepronil, metalaxyl, metconazole, methasulfocarb, metiram, metominostrobin, myclobutanil, MTF-753 (a name of a study), mebenil, mecarbinzid, mercuric chloride, mercuric oxide, mercurous chloride, metalaxyl-M, metam, metazoxolon, methfuroxam, methyl bromide, methyl isothiocyanate, methylmercury benzoate, methylmercury dicyandiamide, metrafenone, metsulfovax, myclozolin, 2-methoxyethylmercury chloride, nabam, nickel bis(dimethyldithiocarbamate), nitrothal-isopropyl, nuarimol, natamycin, nicobifen, nitrostyrene, octhilinone, ofurace, oxadixyl, oxycarboxin, oxpoconazole fumarate, OCH, Orysastrobin, oxine copper, pefurzoate, penconazole, pencycuron, penthiopyrad, phthalide, piperalin, polyoxins, potassium hydrogen carbonate, probenazole, prochloraz, procymidone, propamocarb hydrochloride, propiconazole, propineb, pyrazophos, pyrifenox, pyrimethanil, pyroquilon, pentachlorophenol (PCP), phenylmercuriurea, phenylmercury acetate, phenylmercury chloride, phenylmercury nitrate, phenylmercury salicylate, phosdiphen, picoxystrobin, polycarbamate, polyoxorim, potassium azide, potassium polysulfide, proquinazid, prothiocarb, prothioconazole, pyracarbolid, pyraclostrobin, pyridinitril, pyroxychlor, pyroxyfur, 2-phenylphenol, quinomethionate, quinoxyfen, quintozene, quinacetol, quinazamid, quinconazole, rabenzazole, sodium hydrogen carbonate, sodium hypochlorite, sulfur, spiroxamine, salicylanilide, silthiofam, simeconazole, sodium azide, sodium orthophenylphenoxide, sodium pentachlorophenoxide, sodium polysulfide, streptomycin, tebuconazole, tecnazene, tetraconazole, thiabendazole, thiadiazin/milneb, thifluzamide, thiophanate-methyl, thiram, tolclofos-methyl, tolylfluanid, triadimefon, toriadimenol, triazoxide, tricyclazole, tridemorph, triflumizole, triforine, triticonazole, TCMTB, tecloftalam, tecoram, thiadifluor, thicyofen; thiochlorfenphim, thiomersal, thiophanate, thioquinox, tiadinil, tioxymid, tolylmercury acetate, triamiphos, triarimol, triazbutil, tributyltin oxide, trichlamide, trifloxystrobin, validamycin; vinclozolin, zinc sulfate, zineb, ziram, zoxamide, zarilamid, zinc naphthenate, echlomezol, and Lentinus edodes mycelia extract.

Bactericides: streptomycin, tecloftalam, oxyterracycline, and oxolinic acid, but not limited to these.

Nematocides: aldoxycarb, cadusafos, fosthiazate, fosthietan, oxamyl, and fenamiphos, but not limited to these.

Acaricides: acequinocyl, amitraz, bifenazate, bromopropylate, chinomethionat, chlorobenzilate, clofentezine, cyhexatin, dicofol, dienochlor, etoxazole, fenazaquin, fenbutatin oxide, fenpropathrin, fenproximate, halfenprox, hexythiazox, milbemectin, propargite, pyridaben, pyrimidifen, and tebufenpyrad, but not limited to these.

Insecticides: abamectin, acephate, acetamipirid, aldicarb, allethrin, azinphosmethyl, bendiocarb, benfuracarb, bensultap, bifenthrin, buprofezin, butocarboxim, carbaryl, carbofuran, carbosulfan, cartap, chlorfenapyr, chlorpyrifos, chlorfenvinphos, chlorfluazuron, clothianidin, chromafenozide, chlorpyrifos-methyl, cycloprothrin, cyfluthrin, beta-cyfluthrin, cypermethrin, cyromazine, cyhalothrin, lambdacyhalothrin, deltamethrin, diafenthiuron, diazinon, diacloden, diflubenzuron, dimethylvinphos, diofenolan, disulfoton, dimethoate, emamectin-benzoate, EPN, esfenvalerate, ethiofencarb, ethiprole, etofenprox, etrimfos, fenitrothion, fenobucarb, fenoxycarb, fenpropathrin, fenvalerate, fipronil, fluacrypyrim, flucythrinate, flufenoxuron, flufenprox, tau-fluvalinate, fonophos, formetanate, formothion, furathiocarb, halofenozide, hexaflumuron, hydramethylnon, imidacloprid, isofenphos, indoxacarb, isoprocarb, isoxathion, lufenuron, malathion, metaldehyde, methamidophos, methidathion, metacrifos, metalcarb, methomyl, methoprene, methoxychlor, methoxyfenozide, monocrotophos, muscalure, nidinotefuran, nitenpyram, omethoate, oxydemeton-methyl, oxamyl, parathion, parathion-methyl, permethrin, phenthoate, phoxim, phorate, phosalone, phosmet, phosphamidon, pirimicarb, pirimiphos-methyl, profenofos, protrifenbute, pymetrozine, pyraclofos, pyriproxyfen, rotenone, sulprofos, silafluofen, spinosad, sulfotep, tebfenozide, teflubenzuron, tefluthorin, terbufos, tetrachlorvinphos, thiacloprid, thiocyclam, thiodicarb, thiamethoxam, thiofanox, thiometon, tolfenpyrad, tralomethrin, trichlorfon, triazuron, triflumuron, and vamidothion, but not limited to these.

Biopesticides: Agrobacterium radiobacter, Pseudomonas fluorescens, Pseudomonas sp. CAB-02 (Pseudomonas spp.), Bacillus subtilis, non-pathogenic Erwinia carotovora (Erwinia carotovora subsp. carotovora), Trichodrema sp. (Tricoderma atroviride), Talaromyces flavus, Xanthomonas campestris (Xanthomonas campestris pv. poae), Steinemema carpocapsae, Steinemema glaseri, Verticillium lecanii, Paecilomyces fumosoroseus, Beauveria brongniartii, Pasteuria penetrans, and Monacrosporium phymatophagum, but not limited to these.

These active components of agricultural chemicals can be used alone or in combination of two or more of them.

Among these active components of agricultural chemicals, those with an effect controlling soil diseases, more favorably, those with an effect controlling clubroot disease, including, especially but not limited to, 3-(3-bromo-6-fluoro-2- methylindole-1-ylsulfonyl)-N,N-dimethyl- 1H-1,2,4-triazole-1-sulfonamide, cyazofamide, fluazinam, flusulfamide, and ethaboxam, are favorable for embodiments of the present invention.

The present invention covers preferably the following four phases, during each of which a chemical solution is applied as follows:

- First phase: Before seeding
  A chemical solution is irrigated or sprayed over soil of nursery areas for seedlings of field crops or soil filled in nursery containers for seedlings of field crops.
- Second phase: After seeding, but before covering with soil
  A chemical solution is irrigated or sprayed over seeds on soil, then these seeds are covered with soil.
- Third phase: After seeding and immediate after covering with soil
  A chemical solution is irrigated or sprayed over the surface of cover soil.
- Fourth phase: During nursery of seedlings
  A chemical solution is irrigated or sprayed over soil of nursery areas for seedlings of field crops or soil in nursery containers for seedlings of field crops.

Irrigation or spraying of a chemical solution can be done using an appropriate apparatus such as a watering pot and sprayer.

The amount of chemical solutions per unit number of seedlings is in general, but not specifically limited to, from 20 mL to 2100 mL per 100 plants. The less the amount of an applied chemical solution per unit number of seedlings, the higher its effect controlling soil diseases at a certain amount of applied active components of agricultural chemicals per unit number of seedlings. Therefore, the amount of applied chemical solutions is preferably from 20 to 1600 mL per 100 plants, more preferably from 20 to 1100 mL, further preferably from 20 to 600 mL.

The amount of chemical solutions per unit nursery area for seedlings of field crops or nursery containers for seedlings of field crops is in general, but not specifically limited to, from 20 mL to 2100 mL per 1800 $cm^2$. The less the amount of an applied chemical solution per unit area, the higher its effect controlling soil diseases at a certain amount of applied active components of agricultural chemicals per unit area. Therefore, the amount of applied chemical solutions is preferably from 20 to 1600 mL per 1800 $cm^2$, more preferably from 20 to 1100 mL, further preferably from 20 to 600 mL.

Other example amounts of applied chemical solutions include from 20 to 2000 mL, from 20 to 1500 mL, from 20 to 1000 mL, and from 20 to 500 mL.

The amount of the above-mentioned applied active components of agricultural chemicals is in general, but not limited to, from 0.05 to 20 g, preferably from 0.1 to 10 g and more preferably from 0.1 to 5 g, per 100 seedlings. Also, it is, in general, from 0.05 to 20 g, preferably from 0.1 to 10 g and more preferably from 0.1 to 5 g per 1800 $cm^2$.

Chemical solutions (a water solution or an aqueous dispersion of active components of agricultural chemicals) used in the present invention may be prepared by diluting an agricultural formulation with water. Agricultural formulations include, for example, soluble concentrate, emulsifiable concentrate, wettable powder, water soluble powder, water dispersible granule, water soluble granule, suspension concentrate, concentrated emulsion, suspoemulsion, microemulsion, and gel, but not limited to these.

The above-mentioned agricultural formulation can be obtained through mixing with an appropriate solid or liquid carrier and further, if desirable, adding a surfactant as well as a conventional penetrant, spreader, thickener, cryoprotectant, binder, anti-caking agent, disintegrant, antifoamer, preservative, and anti-decomposer, but not limited to these.

Solid carriers include, for example: natural minerals such as, but not limited to, quartz, kaolinite, pyrophylite, sericite, talc, bentonite, acid clay, attapulgite, zeolite, and diatomite; inorganic salts such as, but not limited to, calcium carbonate, ammonium sulfate, sodium sulfate, and potassium chloride; synthetic silica as well as synthetic silicate; natural polymers such as, but not limited to, wheat, starch, crystal cellulose, calboxymethyl cellulose, and gelatin; sugars such as, but not limited to, glucose, mantose, lactose, and sucrose; and urea.

Liquid carriers include, for example: alcohols such as, but not limited to, ethylene glycol, propylene glycol, and isopropanol; aromatic hydrocarbons such as, but not limited to, xylene, alkylbenzen, and alkyl naphthalene; ethers such as, but not limited to, butyl cellosolve; ketones such as, but not limited to, cyclohexanone; esters such as, but not limited to, gamma-butylolactone; acid amides such as, but not limited to, N-methylpyrrolidone and N-octylpyrrolidone; vagetable oils such as, but not limited to, soybean oil, rapeseed oil, cottonseed oil, and castor oil; and water.

These solid and liquid carriers can be used alone or in combination of two or more of them.

Surfactants include, for example: nonionic surfactant such as, but not limited to, polyoxyethylene alkylethers, polyoxyethylene alkyl (mono- or di-) phenylethers, polyoxyethylene (mono-, di-, or tri) stylyl phenyl ethers, polyoxyethylene polyoxypropylene block copolymers, polyoxyethylene fatty acid (mono- or di-) esters, sorbitan fatty acid esters, polyoxyethylene sorbitan fatty acid esters, castor oilethylene oxide adducts, acetylene glycols, acetylene alcohols, ethylene oxide adducts of acetylene glycols, ethylene oxide adducts of acetylene alcohols, and alkyl glycosides; anionic surfactants such as, but not limited to, alkyl sulfate ester salts, alkyl benzene sulfonates, lignin sulfonates, alkyl sulfosuccinates, naphthalene sulfonates, alkyl naphthalene sulfonates, salts of naphthalene sulfonate formaldehyde condensate, salts of alkyl naphthalene sulfonate formalin condensate , polyoxyethylene alkylether sulfates or phosphate ester salts, polyoxyethylene (mono-or di-) alkylphenylether sulfates or phosphate ester salts, polyoxyethylene (mono-, di-, or tri-) stylyl phenyl ethers sulfates or phosphate ester salts, polycarbonates (for example, polyacrylates, polymaleic acids, and maleic acid-olefin copolymer), and polystyrene sulfonates; cationic surfactants such as, but not limited to, alkylamine salts and alkyl quaternary ammonium salts; amino acid type- and betaine type-ampholytic surfactants; silicone surfactants; and fluoro surfactants.

These surfactants can be used alone or in combination of two or more of them.

Examples of agricultural chemical formulations that can be used for preparing chemical solutions used for the present invention are as follows. In the following examples, "parts" mean parts by mass.

| | |
|---|---|
| [Wettable powder] | |
| Active components of agricultural chemicals | 0.1-80 parts |
| Solid carrier | 5-98.9 parts |
| Surfactants | 1-10 parts |
| Others | 0-5 parts |

In addition, for example, anti-caking agents and anti-decomposers can be included.

| | |
|---|---|
| [Emulsifiable concentrate] | |
| Active components of agricultural chemicals | 0.1-30 parts |
| Liquid carrier | 45-90 parts |
| Surfactants | 4.9-15 parts |
| Others | 0-10 parts |

In addition, for example, spreaders and anti-decomposers can be included.

| | |
|---|---|
| [Suspension concentrate] | |
| Active components of agricultural chemicals | 0.1-70 parts |
| Liquid carrier | 15-98.89 parts |
| Surfactants | 1-12 parts |
| Others | 0.01-30 parts |

In addition, for example, cryoprotectants and thickeners can be included.

| | |
|---|---|
| [Water dispersible granule] | |
| Active components of agricultural chemicals | 0.1-90 parts |
| Solid carrier | 0-98.9 parts |
| Surfactants | 1-20 parts |
| Others | 0-10 parts |

In addition, for example, binders and anti-decomposers can be included.

| | |
|---|---|
| [Soluble concentrate] | |
| Active components of agricultural chemicals | 0.01-70 parts |
| Liquid carrier | 20-99.99 parts |
| Others | 0-10 parts |

In addition, for example, cryoprotectants and spreaders can be included.

The above-mentioned agricultural formulations are typically diluted from 1- to 2000-fold with water before use to be used for irrigation or spraying.

In the present invention, application of the above-mentioned chemical solution can be simultaneous with application of other fungicides, herbicides, insecticides, plant growth regulators, or fertilizers.

The present invention is appropriate especially for controlling diseases and pests harmful to field crops. Specific diseases and pests that can be controlled are as follows, but not limited to these.

Diseases include, but not limited to:

Downy mildew (Pseudoperenospora cubensis), anthracnose (Colletotrichum orbicula), powdery mildew (Sphaerotheca fuliginea), gummy stem blight (Didymella bryoniae), Fusarium wilt (Fusarium oxysporum), gray mold (Botrytis cinerea), cottony rot (Sclerotinia sclerotiorum), damping-off (Fusarium solani), and southern blight (Sclerotium rolfsii) for gourd;
Corynespora leaf spot (Corynespora cassiicola), seedling damping-off (Pythium cucurbitacearum, P. debaryanum, Rhizoctonia solani), root rot (Pythium myriotylum, P. volutum), Phytophthora blight (Phytophthora meronis, P. nicotianae), bacterial leaf spot (Pseudomonas syringae pv. lachrymans), and violet root rot (Helicobasidium mompa) for cucumber;
Brown rot (Phytophthora capsici) and Phytophthora blight (Phytophthora cryptogea) for watermelon;
Damping-off(Pythium debaryanum) and Phytophthora blight (Phytophthora nicotianae) for melon;
Phytophthora blight (Phytophthora capsici) for pumpkin;
Bacterial wilt (Ralstonia solancearum), wilt (Fusarium oxysporum), gray mold (Botrytis cinerea), cottony rot (Sclerotinia sclerotiorum), southern blight (Sclerotium rolfsii) for Solanaceae;
Phytophthora blight (Phytophthora infestans), Phytophthora root rot (Phytophthora cryptogea), gray rot (Phytophthora capsici), ring rot (Alternaria solani), leaf mold (Fulvia fulva), powdery mildew (Oidium sp. and Oidiopsisi sicula), brown rot (Phytophthora nicotianae), bacterial canker (Clavibacter michiganensis), brown root rot (Pyrenochaeta lycopersici), anthracnose (Colletotrichum gloeosporioides), seedling damping-off (Pythium vexans, Rhizoctonia solani), Verticillium wilt (Verticillium dahliae), leaf spot (Stemphylium lycopersici) for tomatoes;
Phytophthora blight (Phytophthora capsici), powdery mildew (Oidiopsis sicula), seedling damping-off(Rhizoctonia solani), leaf spot (Cercospora capsici) for green pepper;
Phytophthora blight (Phytophthora infestans), brown rot (Phytophthora capsici), brown spot (Phomopsis vexans), powdery mildew (Erysiphe cichoracerum and Oidiopsis sicula) for egg-plants;
Blight and rot (Phytophthora porri), Phytophthora blight (Phytophthora nicotianae), southern blight (Sclerotium rolfsii), seedling damping-off (Rhizoctonia solani), black spot (Alternaria porri), soft rot (Erwinia carotovora and E. chrysanthmi), downy mildew (Peronospora destructor), rust (Puccinia allii) for green onions;
Wilt (Fusarium oxysporum), yellow spot (Heterosporium allii), red root rot (Pyrenochaeta terrestris), small sclerotial rot (Botrytis squamosa) for Welsh onions;
Dry rot (Fusarium oxysporum), flag smut (Urocystis cepulae), leaf blight (Ciborinia alli), gray mold (Botrytis cinerea), gray-mold neck rot (Botrytis allii), soft rot (Erwinia rhapontici), scale rot (Burkholderia gladiol) for onions;
Downy mildew (Peronospora parasitica), clubroot (Plasmodiophora brassicae), white rust (Albugo macrospora), black spot (Alternaria japonica and A. brassicae), white leaf spot (Cercosporella brassicae), soft rot (Erwinia carotovora), cottony rot (Sclerotinia sclerotiorum) for cruciferous vegetables;
Foot rot (Thanatephorus cucumeris), Verticillium wilt (Verticillium dahliae) for cabbage;
Yellows (Verticillium dahliae), blossom-end rot (Rhizoctonia solani), black root (Aphanomyces raphani), gray mold (Botrytis cinerea), Pythium rot (Pythium ultimum) for Chinese cabbage;
Anthracnose (Colletotrichum higginsianum), Verticillium black spot (Verticillium albo-atrum) for Japanese radish;
Bacterial wilt (Ralstonia solanacearum), wilt (Verticillium dahliae), cottony rot (Sclerotinia sclerotiorum), black root (Thielaviopsis sp.), rust (Phakopsora pachyrhizi), southern blight (Sclerotium rolfsii), damping-off (Fusarium oxysporum), anthracnose (Colletotrichum truncatum, C. trifolii, Glomerella glycines, Gloeosporium sp.), gray mold (Botrytis cinerea) for beans;
Downy mildew (Peronospora manshurica), stem rot (Phytophthora sojae), leaf blight (Xanthomonas campestris pv. glycines), purple stain (Cercospora kikuchii), sphaceloma scab (Elsinoe glycines), melanose (Diaporthe phaseolorum) for soybean;
Leaf spot (Mycosphaerella personata), Corynespora leaf spot (Mycosphaerella arachidis) for peanut;
Powdery mildew (Erysiphe pisi) for garden peas;
Powdery mildew (Sphaerotheca aphanis), yellow dwarf (Fusarium oxysporum), wilt (Verticillium dahliae), Phytophthora blight (Phytophthora cactorum), bacterial angular leaf spot (Xanthomonas campestris and X. fragariae), black spot (Alternaria alternate), leaf spot (Mycosphaerella fragariae), anthracnose (Colletotrichum acutatum, C. fragariae and Glomerella cingulata), root rot (Phytophthora fragariae), gray mold (Botrytis cinerea), bud blight (Rhizoctonia solani), ring spot (Drenerophoma obscurans) for strawberry;
Cottony rot (Sclerotinia sclerotiorum), bottom rot (Rhizbacter solani), soft rot (Erwinia carotovora), damping-off (Pythium sp.), root rot (Fusarium oxysporum), gray mold (Botrytis cinerea), bacterial leaf spot (Xanthomonas campestris pv. vitians), big-vein (Lettuce big-vein virus), rot (Pseudomonas cichorii, P. marginalis pv. Marginalis and P. viridiflava), downy mildew (Bremia lactucae) for lettuce;
Wilt (Fusarium oxysporum), black scarf (Rhizoctonia solani), black streak (Itersonilia perplexans), bacterial black spot (Xanthomonas campestris pv nigromaculans), black spot (Ascochyta phaseolorum), root rot (Pythium irregulare), violet root rot (Helicobasidium mompa) for burdock;
Wilt (Fusarium oxysporum), powdery mildew (Erysiphe heraclei), black leaf blight (Alternaria dauci), bacterial gall (Rhizoctonia dauci), brown-blotted root rot (Pythium sulcatum), southern blight (Sclerotium rolfsii), soft rot (Erwinia carotovora), root rot (Rhizoctonia solani), leaf spot (Cercospora carotae), violet root rot (Helicobasidium mompa) for carrots;

Brown spot (Alternaria alternata), powdery mildew (Erysiphe cichoracearum), anthracnose (Colletotrichum cichoracearum) for tobacco;
Corynespora leaf spot (Cercospora beticola), necrotic yellow vein (Beet necrotic yellow vein virus) for sugar beet;
Scab (Diplocarpon rosae); powdery mildew (Sphaerotheca pannosa) for roses; and
Corynespora leaf spot (Septoria chrysanthemiindici), white rust (Puccinia horiana) for chrysanthemum.

Insects, mites, nematodes, Mollusca, or Crustacea that can be controlled according to the present invention include:

Lepidopteran pest insects such as diamondback moth (Plutella xylostella), black cutworm (Agrotis ipsilon), cutworm (Agrotis segetum), corn earworm (Helicoverpa armigera), oriental tobacco budworm (Helicoverpa assulta), cotton ballworm (Helicoverpa zea), cabbage moth (Mamestra brassicae), asiatic common looper (Plusia nigrisigna), oriental armyworm moth (Pseudaletia separata), beet armyworm (Spodoptera exigua), common cutworm (Spodoptera litura), cabbage webworm (Hellula undalis), cabbage looper (Trichoplusia ni), small white (Pieris rapae crucivora);
Coleopteran pest insects such as twenty-eight-spotted ladybird (Henosepilachna vigintioctopunctata), cucurbit leaf beetle (Aulacophora femoralis), yellow striped flea beetle (Phyllotreta striolata);
Hemiptera pest insects such as silverleaf whitefly (Bemisia argentifolii), sweetpotato whitefly (Bemisia tabaci), greenhouse whitefly (Trialeurodes vaporariorum), melon aphid (Aphis gossypii), green peach aphid (Myzus persicae);
Thysanoptera pest insects such as western flower thrips (Frankliniella occidentalis), flower thrips (Frankliniella intonsa), yellow tea thrips (Scirtothrips dorsalis), melon thrips (Thrips palmi), onion thrips (Thrips tabaci);
Diptera pest insects such as tomato leafminer (Liriomyza bryoniae), serpentine leafminer (Liriomyza trifolii), seed corn maggot (Hylemya platura);
Spider mites such as kanzawa spider mite (Tetranychus kanzawai), twospotted spider mite (Tetranychus urticae);
Tarsonemid mites such as broad mite (Polyphaotarsonemus latus), cyclamen mite (Steneotarsonemus pallidus);
Grain mites such as cheese mite (Tyrophagus putrescentiae); and
Nematodes such as cobb's root-lesion nematode (Prathylenchus penetrans), walnut root-lesion nematode (Prathylenchus vulnus), potato cyst nematode (Globodera rostochiensis), soybean cyst nematode (Heterodera glycines), northern root-knot nematode (Meloidogyne hapla), southern root-knot nematode (Meloidogyne incognita).

Field crops to which the present invention is applicable include, for example: food crops such as rice, a family of wheat including oats, barley, wheat, and rye, gramineous crops including corn, legume crops including adzuki beans, common beans, and peas, other pulses including broad beans, soy beans, and peanuts, potatoes, sweetpotatoes, buckwheat;
Vegetables such as spinach, turnip, cauliflower, cabbage, komatsuna, Japanese radishes, Chinese cabbage, broccoli, qing geng cai, wasabi, pumpkins, cucumbers, oriental pickling melons, watermelons, melons, burdocks, garland chrysanthemums, romaine lettuce, butterburs, aroids, ginger, Japanese ginger, Japanese parsley, celery, carrots, parsley, Japanese honewort, red peppers, green peppers, tomatoes, eggplants, strawberrys, asparagus, onions, Welsh onions, leeks, garlic, Welsh onions, rakkyo (Allium Chinese), wakegi green onions;
Industrial crops such as cottons, beets, rapeseeds, sugar canes, sesame, tobaccos, konnyaku; and
Flowering plants such as chrysanthemums, carnations, roses, stocks, gentians, perennial gypsophila, orchids, statices, gerbera daisies, Eustomas, tulips, lilies, gladioluses, freesias, irises, narcissuses, common marigolds, marguerites.

## Examples

Usefulness of the present invention is described through the following tests, but the present invention is not limited to these examples.
Test soil (i.e. contaminated soil) and test plants as well as production example of water dispersible granule of compound A used in the examples below are as follows: '

- Test soil: Clubroot disease pathogen added at 2 x $10^5$ resting spores/g to healthy soil
- Test plants: Chinese cabbages (Musou breed) that were raised up in a cell tray (98 seedlings/cell and 1800 $cm^2$/cell) until 3- to 4-leaf stages
- Water dispersible granule of Compound A:

[Formula]

| | | |
|---|---|---|
| (1) | Compound A | 50.0 parts by mass |

(continued)

| | | |
|---|---|---|
| (2) | Sodium alkylnaphthalene sulfonate | 3.0 parts by mass |
| (3) | Sodium lignin sulfonate | 15.0 parts by mass |
| (4) | Ammonium sulfate | balance |

After the above (1) to (4) were mixed and ground, granulation water was added to knead. After granulation using an extruding granulation machine equipped with 0.8-mm screen, water dispersible granule was obtained through drying and size regulation.

[Test Example 1] A test for effect controlling clubroot disease of Chinese cabbages: for each amount of chemical solution

Chemical solution, which was obtained by diluting water dispersible granule of Compound A with water and which concentration was adjusted so that applied dose of Compound A became the same, was sprayed to the bottom of the test plants at 5, l0, or 20 mL/cell tray. Suspension concentrate of cyazofamid (Ranman flowable [trade name] by Ishihara Sangyo Kaisha, Ltd.) was also diluted with water to prepare chemical solution and treated similarly as Compound A.
On the next day of spraying, seedlings were removed from the cell trays to settle them in pots with the diameter of 10 cm using the test soil.
After a four-week nursery in a green house (adjusted to 20 °C), plants were removed together with soil from the pots to transplant them to four-sun (or 12.12-cm) pots filled with healthy soil. After three weeks, the degree of epiphytation of clubs on the roots was examined to evaluate the incidence of the disease and protective value.
The incidence of the disease and protective value were calculated according to the following equations.

$$\text{Incidence of the disease} = [\Sigma(\text{incidence index x diseased plants for each grade of severity})/(\text{examined plants x 3})] \times 100$$

$$\text{Protective value} = [1-(\text{incidence of the disease in a treated area})/(\text{incidence of the disease in a non-treated area})] \times 100$$

[Incidence index]

0: No club epiphytation
0.5: Club formation on the lateral roots
1: Small club formation on the taproot
2: Large club formation on the taproot
3: Club formation on the lateral roots and taproot

The results obtained from Test Example 1 are shown in Table 1.

Table 1

| Formulation | Concentration of active component (ppm) | Amount of sprayed chemical solution (L/tray) | Applied dose (mg ai/tray) | Incidence (%) | Protective value (%) |
|---|---|---|---|---|---|
| Water dispersible granule of Compound A | 1000 | 0.5 | 500 | 8.3 | 91.7 |

(continued)

| Formulation | Concentration of active component (ppm) | Amount of sprayed chemical solution (L/tray) | Applied dose (mg ai/tray) | Incidence (%) | Protective value (%) |
|---|---|---|---|---|---|
| Water dispersible granule of Compound A | 500 | 1.0 | 500 | 33.3 | 66.7 |
| Water dispersible granule of Compound A | 250 | 2.0 | 500 | 83.3 | 16.7 |
| Suspension concentrate of cyazofamid | 800 | 0.5 | 400 | 16.7 | 83.3 |
| Suspension concentrate of cyazofamid | 400 | 1.0 | 400 | 33.3 | 66.7 |
| Suspension concentrate of cyazofamid | 200 | 2.0 | 400 | 45.8 | 54.2 |
| No treatment | | | | 100.0 | --- |

As shown in Table 1, both water dispersible granule of Compound A and suspension concentrate of cyazofamid provided the lowest incidence and excellent protective value at the amount of sprayed chemical solution of 0.5 L/tray.

[Test Example 2] A test for effect controlling clubroot disease of Chinese cabbages: for each treatment method

(1) Irrigation for seedlings in cells

The test plants were irrigated with chemical solution that water dispersible granule of Compound A was diluted 500-fold with water at 0.5 L/tray. The next day, the treated seedlings were settled in the field contaminated with clubroot disease of Brassicaceae.

(2) Mixing with soil

Mixing Compound A with soil was done by scattering a powder formulation on the surface of soil of the field contaminated with clubroot disease of Brassicaceae and mixing them well on the day of settled planting so that a 30 kg powder formulation was mixed per 10 a.

In 60 days of settled planting, the number of plants for each grade of severity of club epiphytation was examined and the incidence of the disease was calculated according to the following equation.

Incidence of the disease = [Σ(incidence index x diseased plants for each grade of severity)/(examined plants x 4)] x 100

Protective value = [1-(incidence of the disease in a treated area)/(incidence of the disease in a non-treated area)] x 100

Incidence index

0: No club epiphytation
1: Club formation over 25% or less of the whole roots
2: Club formation over 25-50% of the whole roots
3: Club formation over 50-75% of the whole roots
4: Club formation over 75% or more of the whole roots

Obtained results are shown in Table 2.

Table 2

| Formulation | Treatment method | Dose | Protective value (%) |
|---|---|---|---|
| Water dispersible granule of Compound A | Irrigation for seedlings in cells | 400 mg ai/tray 800 ppm 0.5 L/tray (equivalent to 15.6 g ai/10 a) | 64.5 |
| Powder formulation of Compound A | Mixing with soil | 150 g ai/10 a | 60.4 |

As shown in Table 2, the results shows that irrigation for seedlings in cells adopted as a treatment method needed about 10-fold less amount of the formulation compared with mixing with soil and provided excellent protective value.

INDUSTRIAL APPLICABILITY

The present invention enables labor-saving application of agricultural chemicals.

**Claims**

**1.** A method for applying an agricultural chemical comprising:

irrigating or spraying a water solution or an aqueous dispersion of an active component of the agricultural chemical to a nursery area for seedlings of a field crop before settled planting of the seedlings.

**2.** A method for applying an agricultural chemical comprising:

irrigating or spraying a water solution or an aqueous dispersion of an active component of the agricultural chemical to a nursery container for seedlings of a field crop before settled planting of the seedlings.

**3.** A method for applying an agricultural chemical comprising:

irrigating or spraying a water solution or an aqueous dispersion of an active component of the agricultural chemical to a nursery container for seedlings of a field crop during a period between bed soil filling and settled planting of the seedlings.

**4.** The method for applying according to any one of claims 1 to 3, wherein the water solution or the aqueous dispersion of the active component of the agricultural chemical is prepared by diluting an agricultural chemical formulation with water.

**5.** The method for applying according to any one of claims 1 to 4, wherein the water solution or the aqueous dispersion of the active component of the agricultural chemical is irrigated or sprayed at a volume from 20 mL to 2100 mL per 100 plants.

**6.** The method for applying according to any one of claims 1 to 4, wherein the water solution or the aqueous dispersion of the active component of the agricultural chemical is irrigated or sprayed at a volume from 20 mL to 1600 mL per 100 plants.

**7.** The method for applying according to any one of claims 1 to 4, wherein the water solution or the aqueous dispersion of the active component of the agricultural chemical is irrigated or sprayed at a volume from 20 mL to 1100 mL per 100 plants.

**8.** The method for applying according to any one of claims 1 to 4, wherein the water solution or the aqueous dispersion of the active component of the agricultural chemical is irrigated or sprayed at a volume from 20 mL to 600 mL per 100 plants.

**9.** The method for applying according to any one of claims 1 to 4, wherein the water solution or the aqueous dispersion of the active component of the agricultural chemical is irrigated or sprayed at a volume from 20 mL to 2100 mL per a 1800 $cm^2$-nursery-area for the seedlings.

**10.** The method for applying according to any one of claims 1 to 4, wherein the water solution or the aqueous dispersion of the active component of the agricultural chemical is irrigated or sprayed at a volume from 20 mL to 1600 mL per a 1800 $cm^2$-nursery-area for the seedlings.

**11.** The method for applying according to any one of claims 1 to 4, wherein the water solution or the aqueous dispersion of the active component of the agricultural chemical is irrigated or sprayed at a volume from 20 mL to 1100 mL per a 1800 $cm^2$-nursery-area for the seedlings.

**12.** The method for applying according to any one of claims 1 to 4, wherein the water solution or the aqueous dispersion of the active component of the agricultural chemical is irrigated or sprayed at a volume from 20 mL to 600 mL per a 1800 $cm^2$-nursery-area for the seedlings.

**13.** The method for applying according to any one of claims 1 to 12, wherein the active component of the agricultural chemical is an insecticide or a fungicide.

**14.** The method for applying according to any one of claims 1 to 12, wherein the active component of the agricultural chemical is a fungicide.

**15.** The method for applying according to any one of claims 1 to 12, wherein the active component of the agricultural chemical has an effect controlling a soil disease.

**16.** The method for applying according to any one of claims 1 to 12, wherein the active component of the agricultural chemical has an effect controlling clubroot disease.

**17.** The method for applying according to claim 16, wherein the active component with an effect controlling clubroot disease is 3-(3-bromo-6-fluoro-2-methylindole-1-ylsulfonyl)-N,N-dimethyl-1H-1,2,4-triazole-1-sulfonamide, cyazofamide, fluazinam, flusulfamide, or ethaboxam.

**18.** A method for controlling pests using the method for applying according to any one of claims 1 to 17.

**19.** A water solution or an aqueous dispersion of an active component of an agricultural chemical used in the method for applying according to any one of claims 1 to 17.

**INTERNATIONAL SEARCH REPORT**

International application No.
PCT/JP2006/310143

A. CLASSIFICATION OF SUBJECT MATTER
***A01N25/00***(2006.01), ***A01N25/02***(2006.01), ***A01N25/04***(2006.01), ***A01N41/06***(2006.01), ***A01N43/40***(2006.01), ***A01N43/50***(2006.01), ***A01N43/78***(2006.01), ***A01N43/653***(2006.01)
According to International Patent Classification (IPC) or to both national classification and IPC

B. FIELDS SEARCHED
Minimum documentation searched (classification system followed by classification symbols)
***A01N25/00***(2006.01), ***A01N25/02***(2006.01), ***A01N25/04***(2006.01), ***A01N41/06***(2006.01), ***A01N43/40***(2006.01), ***A01N43/50***(2006.01), ***A01N43/78***(2006.01), ***A01N43/653***(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 8-71 A (TAKII & CO., LTD.), 09 January, 1996 (09.01.96), Claims 1 to 4; example 1 (Family: none) | 1-19 |
| X | JP 9-124402 A (Takeda Chemical Industries, Ltd.), 13 May, 1997 (13.05.97), Claim 1; Par. Nos. [0013] to [0014] (Family: none) | 1-13,18-19 |
| A | JP 2000-327502 A (Hokko Chemical Industry Co., Ltd.), 28 November, 2000 (28.11.00), Claims 1, 5 (Family: none) | 1-19 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 June, 2006 (01.06.06) | 13 June, 2006 (13.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/310143

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-194119 A (Hokko Chemical Industry Co., Ltd.), 03 August, 1993 (03.08.93), Claim 1; Par. No. [0009] (Family: none) | 1-19 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9921851 A


### Non-patent literature cited in the description


- Shimpan Dojo Byogai no Tebiki (New Edition of A Manual of Soil Diseases. Japan Plant Protection Association, 01 October 1984, 175-184
- Noyaku Sampu Gijutsu (Techniques for Spraying Agricultural Chemicals. Japan Plant Protection Association, 1998, 125-126202-207